# EUROPEAN PATENT SPECIFICATION

(11) **EP 4 071 442 B1**
(45) Date of publication and mention of the grant of the patent: **16.08.2023**
(21) Application number: 21211840.0
(22) Date of filing: 01.12.2021
(51) Int. Cl.: G01C 23/00, G01C 21/20, G01C 21/36, G08G 5/02, G05D 1/00

(54) **SYSTEMS AND METHODS FOR PROVIDING CONTEXTUAL THREE-DIMENSIONAL IMAGERY TO AIRCRAFT OPERATORS**
SYSTEME UND VERFAHREN ZUR BEREITSTELLUNG VON KONTEXTUELLEN DREIDIMENSIONALEN BILDERN FÜR FLUGZEUGBETREIBER
SYSTÈMES ET PROCÉDÉS POUR FOURNIR UNE IMAGERIE TRIDIMENSIONNELLE CONTEXTUELLE AUX OPÉRATEURS D'AÉRONEF

(30) Priority: 08.04.2021 IN 202111016541; 26.05.2021 US 202117331446
(43) Date of publication of application: 12.10.2022
(73) Proprietor: Honeywell International Inc., Charlotte, NC 28202 (US)
(72) Inventor: GURUSAMY, Saravanakumar, Charlotte, 28202 (US); GADICHERLA, Madhava, Charlotte, 28202 (US); BALASUBRAMANIAN, Jayasenthilnathan, Charlotte, 28202 (US)
(74) Representative: Haseltine Lake Kempner LLP

(56) References cited:
- EP-A1- 3 467 436
- EP-A2- 2 431 960
- US-A1- 2014 267 723
- US-A1- 2019 088 025

## Description

### CROSS-REFERENCE TO RELATED APPLICATIONS

This application claims the benefit of priority under 35 U.S.C. § 119 from Indian Patent Application No. 202111016541, filed on April 8, 2021.

### TECHNICAL FIELD

Various embodiments of the present disclosure relate generally to the field of navigation for urban air mobility vehicles and, more particularly, to systems and methods for providing contextual three-dimensional imagery to aircraft operators.

### BACKGROUND

Urban air mobility (UAM) vehicles are often used to navigate at low altitudes in regions with features such as tall buildings and structures, including some buildings on which the UAM vehicle may land. While navigating such airspaces at lower altitudes, traditional two-dimensional navigation views may not provide the vehicle operator with relevant information such as the relative heights of the buildings and structures along the vehicle's path. On the other hand, three-dimensional navigation views may be cluttered with details not relevant to the vehicle's path, while potentially obscuring relevant information behind or under the less relevant information. Further, constant and dynamic rendering of three-dimensional airspace may be a resource intensive process in a vehicle potentially operating with limited resources.

The present disclosure is directed to overcoming one or more of these above-referenced challenges.

US 2014/267723 A1 discloses systems and methods for providing enhanced situational awareness to captured image data.

US 2019/088025 A1 discloses a display device that receives video data, location data, position data from a remotely controlled unmanned aerial vehicle.

EP 2 431 960 A2 discloses a ground navigational display, system and method displaying buildings in three-dimensions.

EP 3 467 436 A1 discloses an unmanned aerial vehicle, data processing device, path selection device, processing method and processing program.

### SUMMARY OF THE DISCLOSURE

According to certain aspects of the disclosure, systems and methods are disclosed for providing contextual three-dimensional imagery to aircraft operators.

The present invention is defined by the independent claims, to which reference should now be made. Advantageous embodiments are set out in the dependent claims.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system environment in which methods, systems, and other aspects of the present disclosure may be implemented;
FIG. 2 depicts a flowchart for an exemplary process for providing contextual three-dimensional imagery to aircraft operators, according to one or more embodiments;
FIG. 3 depicts an exemplary graphical user interface, according to one or more embodiments;
FIG. 4 depicts an exemplary graphical user interface indicating the power/fuel range of a vehicle, according to one or more embodiments;
FIG. 5 depicts an exemplary emergency landing graphical user interface, according to one or more embodiments;
FIG. 6 depicts an exemplary graphical user interface identifying buildings having landing capabilities, according to one or more embodiments;
FIG. 7A and 7B depict exemplary graphical user interfaces during the cruising and landing phases of flight, according to one or more embodiments;
FIG. 8 depicts an exemplary graphical user interface indicating landing information for one of the buildings, according to one or more embodiments; and
FIGS. 9A and 9B depict an exemplary graphical user interface before and after selection of a building for which building information is desired, according to one or more embodiments.

### DETAILED DESCRIPTION OF EMBODIMENTS

Various embodiments of the present disclosure relate generally to the field of navigation for urban air mobility vehicles and, more particularly, to systems and methods for providing contextual three-dimensional imagery to aircraft operators.

The present disclosure is directed to overcoming one or more of the challenges discussed above. As UAM vehicles generally operate at lower altitudes than other traditional aircraft, the presence of buildings and other structures in the airspace is relevant to aircraft operators. Accordingly, aircraft may be fitted with a number of displays and navigation aids to provide the operators with information, for example, the positions and heights of buildings in the airspace. When operating the aircraft, the operators may desire certain information and/or interface views during certain flight situations, for example, providing the nearest landing pads in an emergency, providing a visual representation of the aircraft range when power levels are low, or focusing on the destination landing pad during the landing phase of flight. Conversely, there may be situations in which there is too much information being conveyed on a crowded display, for example, displaying buildings far from the flight path or buildings that block the operator's view of the destination landing pad.

In general, the present disclosure is directed to systems and methods that are able to address one or more of the above challenges by providing contextual three-dimensional imagery to aircraft operators to keep them fully apprised of the airspace and able to view relevant information about landing pads and buildings. For instance, a system may provide the operator of a vehicle with a visual representation of each of the relevant buildings and structures present in the airspace along with visual characteristics that allow the operator to determine relevant information visually, and at a glance. The systems and/or methods of the present disclosure for providing contextual three-dimensional imagery to aircraft operators may have an advantage of reducing the burden on the vehicle operator, thereby allowing the operator to place more attention on other critical aspects of the vehicle flight.

Therefore, by providing contextual three-dimensional imagery, operators may be able to be aware of information most relevant to the flight situation, while not being overwhelmed and/or distracted with information that is not relevant in the present flight context.

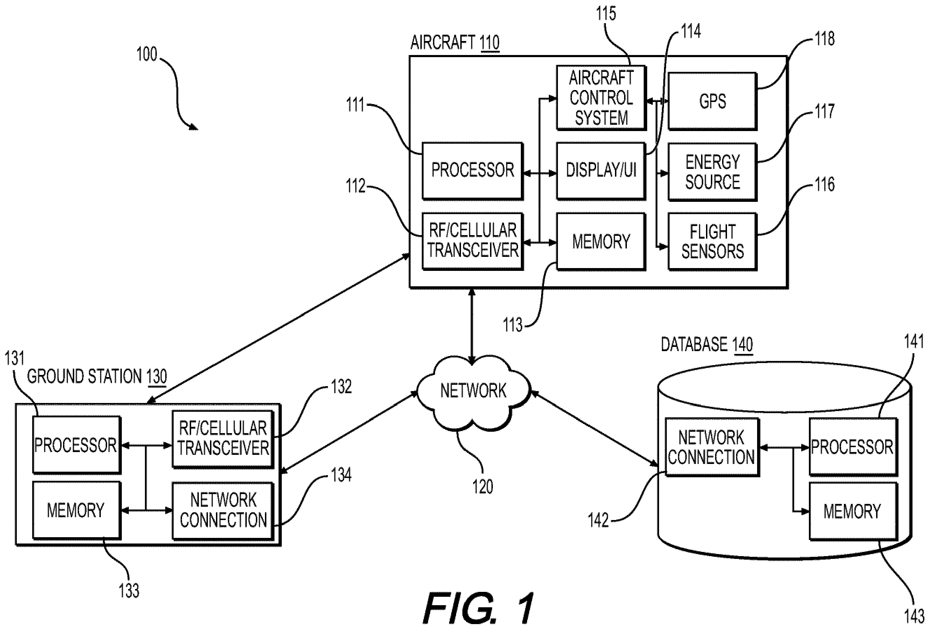

FIG. 1 depicts an example of a system environment 100 in which systems, methods, and other aspects of the present disclosure may be implemented. The system environment 100 of FIG. 1 may include an aircraft 110, a network 120, one or more ground stations 130, and a database 140. Aircraft 110 may include processor 111 in communication with a plurality of other components such as RF/cellular transceiver 112, memory 113, display/user interface (UI) 114, aircraft control system 115, flight sensors 116, energy source 117, and GPS 118. Processor 111 may include one or more processors that comprise the computing and flight management systems of aircraft 110. Memory 113 may be one or more components configured to store data related to aircraft 110, including instructions for operating flight components and aircraft systems (e.g., autopilot, route planning, communication). Processor 111 and memory 113 may display information to, and receive inputs from an operator of aircraft 110 via display/UI 114. Display/UI 114 may be of any suitable type, such as one or more monitors, touchscreen panels, heads-up displays, and may include operator input devices such as joysticks, buttons, touch-responsive panels, mice, trackpads, voice recognition devices, and the like.

Aircraft 110 can include aircraft control system 115 to serve as the controller of flight components and aircraft systems (e.g., control surfaces, propulsion, energy generation/management). In some embodiments, aircraft control system 115 may communicate with GPS 118 in order to, for example, locate aircraft 110 in the airspace; energy source 117 to, for example, manage aircraft range and speed; and flight sensors 116 to, for example, monitor the operating and flight characteristics of aircraft 110. Without deviating from the scope of this disclosure, aircraft 110 may have additional elements that can be in communication with aircraft control system 115 and/or processor 111.

Aircraft 110 may use RF/cellular transceiver 112 to communicate with other elements of the system environment, for example, via network 120 or directly by radio communication. Network 120 may be implemented as, for example, the Internet, a wireless network, Bluetooth, Near Field Communication (NFC), or any other type of network or combination of networks that provides communications between one or more components of the system environment 100. In some embodiments, the network 120 may be implemented using a suitable communication protocol or combination of protocols such as a wired or wireless Internet connection in combination with a cellular data network.

To aid and/or guide aircraft 110, one or more ground stations 130 may provide aircraft 110 with information, such as information regarding air traffic, weather conditions, and/or other information useful for the flight of aircraft 110. A ground station 130 may include a processor 131, an RF/cellular transceiver 132, memory 133, and network connection 134. Processor 131 and memory 133 may collect and transmit information via RF/cellular transceiver 132 and/or network connection 134. Ground station 130 may be in communication with, for example, air traffic control, meteorologists, and one or more databases 140.

One or more databases 140 may be repositories for system information such as map data, building data, flight plan data, and the like. Database 140 may include a processor 141, a network connection 142, and a memory 143. Memory 143 may store data, processor 141 may access and organize the stored data to respond to requests and provide updates to the stored data, and information may be provided to other elements in system environment 100 via network connection 142. In some embodiments, database 140 may communicate directly with aircraft 110 via network 120. Further, ground station 130 may be able to relay requests for information from aircraft 110 to database 140 via one or more of its RF/cellular transceiver 132 and network connection 134.

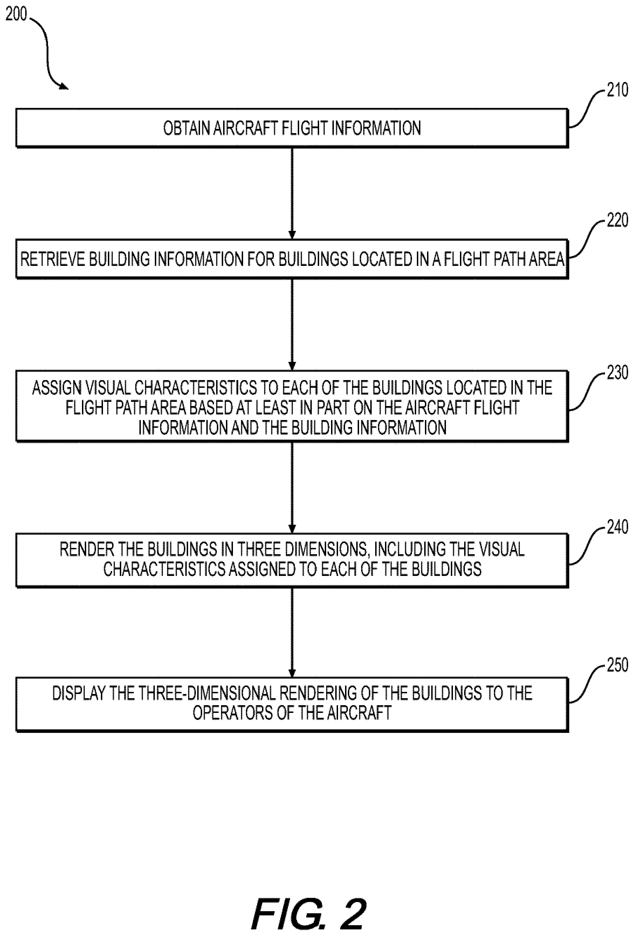

FIG. 2 illustrates an exemplary method 200 for providing contextual three-dimensional imagery to aircraft operators in accordance with embodiments of the present disclosure. It should be understood that the steps described herein are merely illustrative such that additional steps may be included without departing from the scope of the present disclosure.

Beginning at step 210, processor 111 may obtain aircraft flight information, for example from aircraft control system 115. Aircraft flight information may include one or more of a current position, a current trajectory, an energy level, a target destination, a phase of flight, and/or an operating status of the aircraft.

Having obtained the aircraft flight information, at step 220, the system may then retrieve building information for one or more buildings located in an area around the flight path and aircraft 110. This can include, for example, map data, information regarding the dimensions and positions of one or more buildings, information regarding which of the one or more buildings is capable of being landed upon, information regarding the features and/or amenities available at one or more buildings, and/or other information that may be relevant to an aircraft that is or will be in the vicinity of one or more buildings.

Using the aircraft flight information and the building information, at step 230, processor 111 may assign visual characteristics to each of the buildings and structures located in the flight path area. For example, this may include assigning one or more visual characteristics to the destination of the aircraft, buildings with landing pads, buildings that are in restricted airspace, buildings that are out of the range of the aircraft, buildings above or below a certain height, and/or buildings that lack one or more of these features. The visual characteristics assigned to each building may include such variations as, for example, color, opacity, texture, symbology, luminescence, and/or visual effects such as blinking or flashing. In some embodiments, the operator of aircraft 110 may be able to determine their own set of visual characteristics based on a preference, such as the use of a preferred color for the destination or the avoidance of colors that the operator may not be able to distinguish (e.g., an operator with red-green color blindness). Aircraft operators can be aware of the assignment criteria, and therefore may be able to determine, based on the visual characteristic applied, that a building in the airspace has or lacks a certain feature, or is in a restricted or unreachable airspace.

Once processor 111 has determined which visual characteristics should be assigned to a building or structure, at step 240, processor 111 may begin to render the buildings and structures in three dimensions such that the three-dimensional rendering includes the assigned visual characteristics. At step 250, the rendered buildings and structures may be displayed, for example, on display/UI 114 so that the operators of the aircraft can observe the three-dimensional airspace.

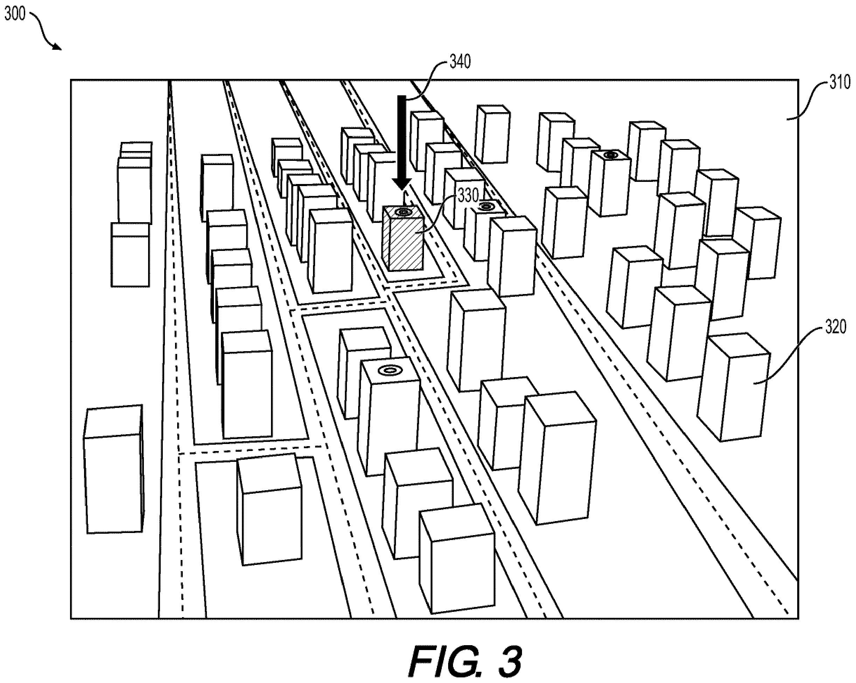

As noted above, the manner in which the visual characteristics are assigned to the buildings and structures may vary based on a number of factors and contexts. A visual characteristic may be assigned based on, for example, whether or not the building is the current destination for aircraft 110. An exemplary GUI 300 in accordance with these criteria is shown in FIG. 3. GUI 300 may include an airspace 310, buildings/structures 320, a destination 330, and an indicator to highlight the destination 340. This display configuration may enable an operator of aircraft 110 to maintain awareness of the location and identity of the destination building at a glance while operating the aircraft.

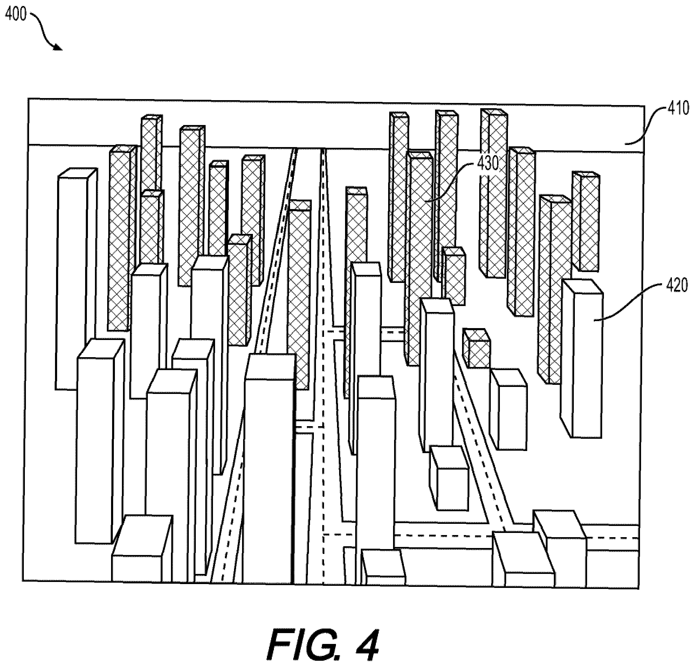

One factor that is considered when assigning visual characteristics is whether or not aircraft 110 has enough energy to reach the Another factor may be if the building is in a restricted portion of airspace. In order to keep the aircraft operators apprised of the energy level and optionally the aircraft's proximity to a no-fly zone, a visual characteristic is assigned based on whether or not the building is within a calculated range of aircraft 110 and optionally whether or not the building is in otherwise restricted airspace, such as a no-fly zone. An exemplary GUI 400 in accordance with these criteria is shown in FIG. 4. GUI 400 includes an airspace 410, in-range buildings/structures 420, and buildings designated out of range or in restricted airspace 430. A GUI such as GUI 400 may be selected by an operator, or it may be automatically engaged in circumstances when the aircraft 110 has a low power/fuel level remaining, or is adjacent to a restricted airspace. Regardless of how GUI 400 is selected, it may allow an operator to be able to visually distinguish buildings that are or are not navigable for aircraft 110 at the present time. In a stressful flight situation, such as when the aircraft is running low on power/fuel, the operator of aircraft 110 may be able to conserve attention by having GUI 400 provide a stark visual representation of the aircraft's range that is quickly discernable.

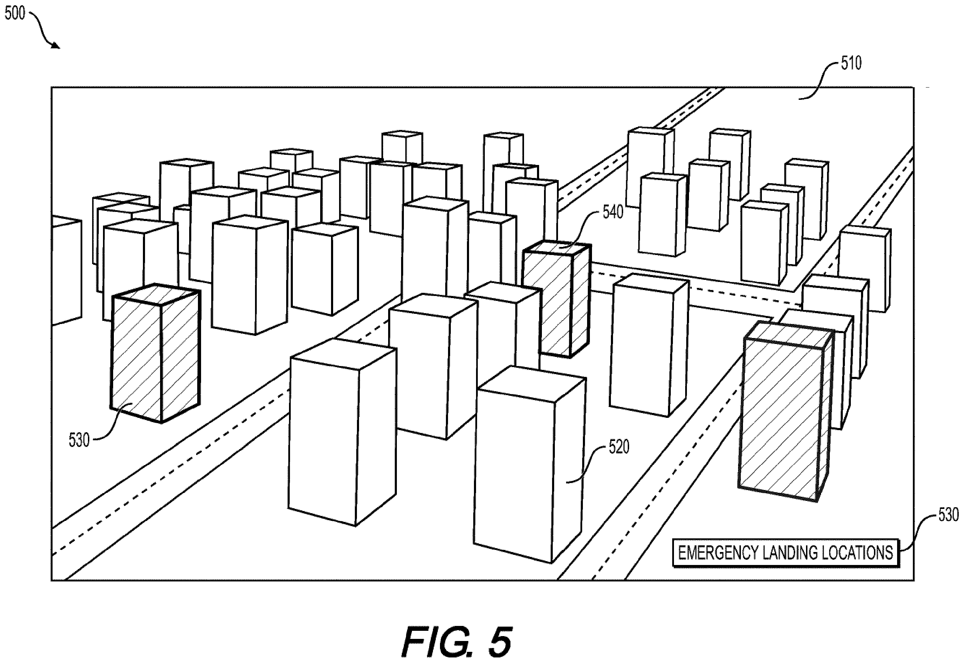

In some embodiments in accordance with the present disclosure, the existence of an emergency involving aircraft 110 may require an unplanned emergency landing. In response to determining that the operational status of aircraft 110 is one requiring an emergency landing, processor 111 may reassign visual characteristics to the buildings based on whether or not they are the closest emergency landing options. An exemplary GUI 500 in accordance with these criteria is shown in FIG. 5. GUI 500 may include an airspace 510, buildings/structures 520, an indicator that indicates the presence of an emergency 530, and nearby buildings suitable for an emergency landing 540. In an emergency, when time may be of the essence, GUI 500 may provide the aircraft operator with an interface capable of providing the information that is contextually critical in an easy-to-see format.

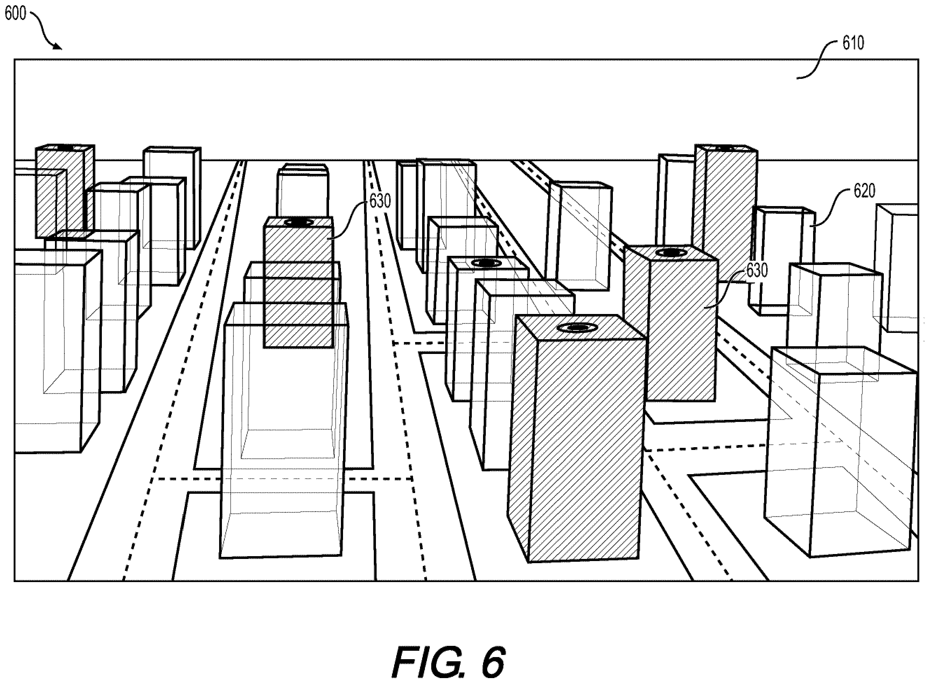

Even absent an emergency, the aircraft operators may desire to be aware of which buildings have a landing pad or other arrangement on which aircraft 110 may be capable of landing. FIG. 6 depicts a GUI 600 that may include an airspace 610, buildings/structures 620, and may distinguish buildings on which an aircraft can land 630 by applying an opacity that is greater than those of the buildings on which the aircraft cannot land. By applying a visual landing characteristic and varying the opacity in this manner, buildings without landing pads may be less able to block the operator's view of those that are capable of being landed upon. As buildings with landing pads may be more likely to have air traffic around them, the operator can have a clearer view of those spaces, unobstructed by buildings that will not have aircraft landing and taking off therefrom.

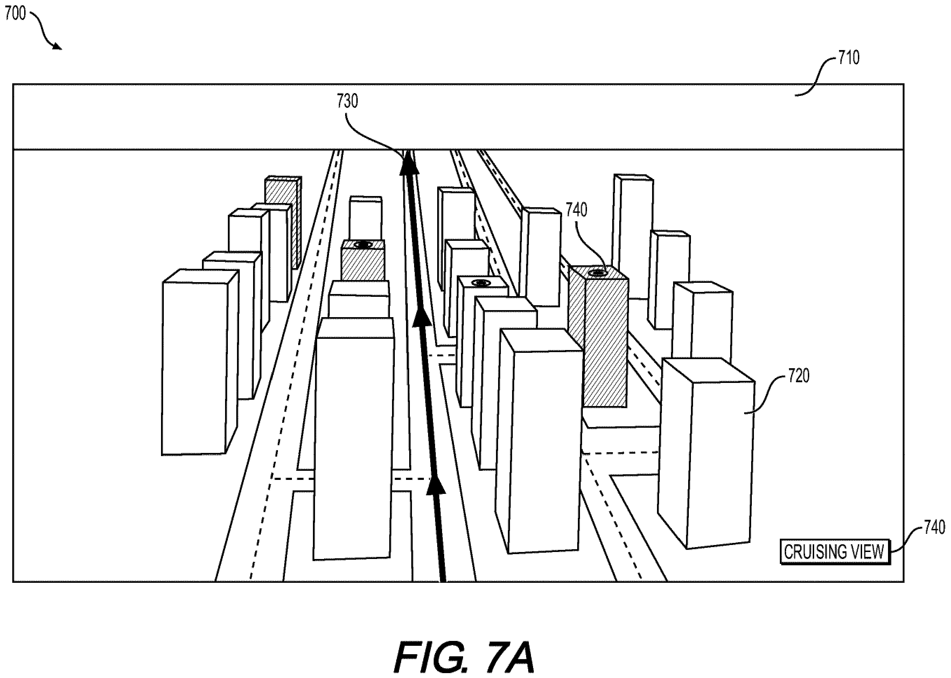

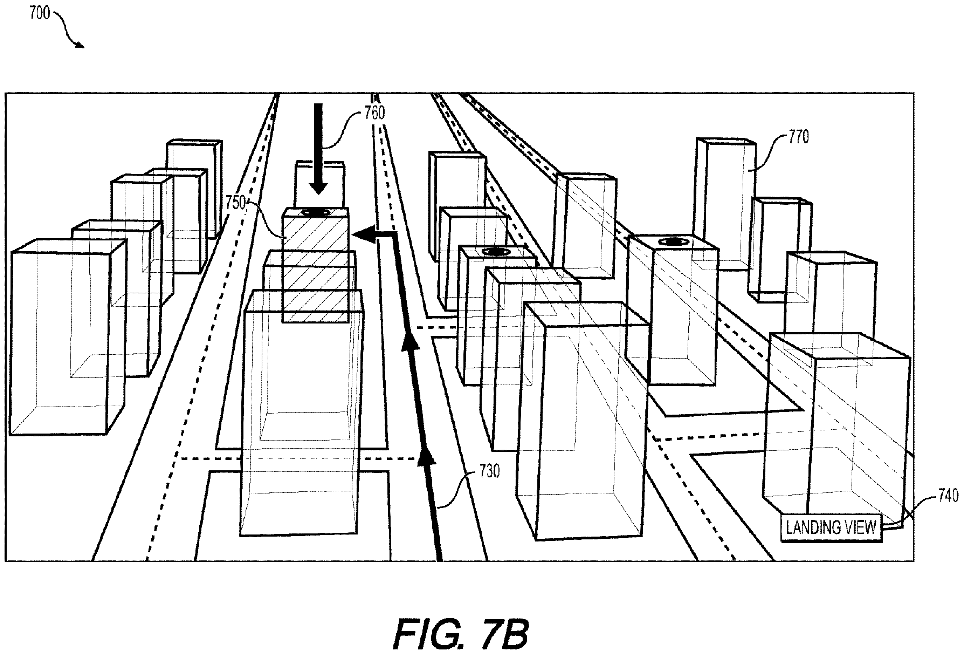

Depending on the phase of flight, particular information may be important to the aircraft operators, and some information may be less relevant. FIGS. 7A and 7B depict GUI 700 during a cruising phase of flight and a landing phase of flight, respectively. FIG. 7A depicts an airspace 710, buildings 720, the flight path 730 for aircraft 110, and a phase of flight element 740 that can indicate to the operator what the current phase of flight may be. During the flight of aircraft 110 along flight path 730, there may be periods of time when aircraft 110 is simply proceeding at a fixed speed, in a fixed direction, and/or at a fixed altitude. In such portions of the flight, the aircraft 110 may be considered in a cruising phase. While in the cruising phase, the aircraft operators may not require that GUI 700 render and display buildings that are far off from the cruising flight path, for example more than a predetermined distance from flight path 730. In these situations, processor 111 may be able to conserve resources, by selectively rendering the buildings that are immediately adjacent to flight path 730. The aircraft operators may also be better able to focus on flight path 730 when some of the less relevant buildings/structures are removed from GUI 700.

While the selective rendering of buildings 720 may be appropriate during the cruising phase of flight, FIG. 7B illustrates how GUI 700 may automatically (or manually) change over to a landing view as aircraft 110 approaches destination 750. In this phase of flight, GUI 700 may add an indicator 760 to better identify the landing pad, and may also reduce the opacity of non-relevant buildings 770. By making these adjustments to GUI 700 as the context of the phase of flight changes, the operator(s) may be shown the currently relevant information regarding airspace 710 as it relates to the potential maneuvers or control inputs required of the operator(s).

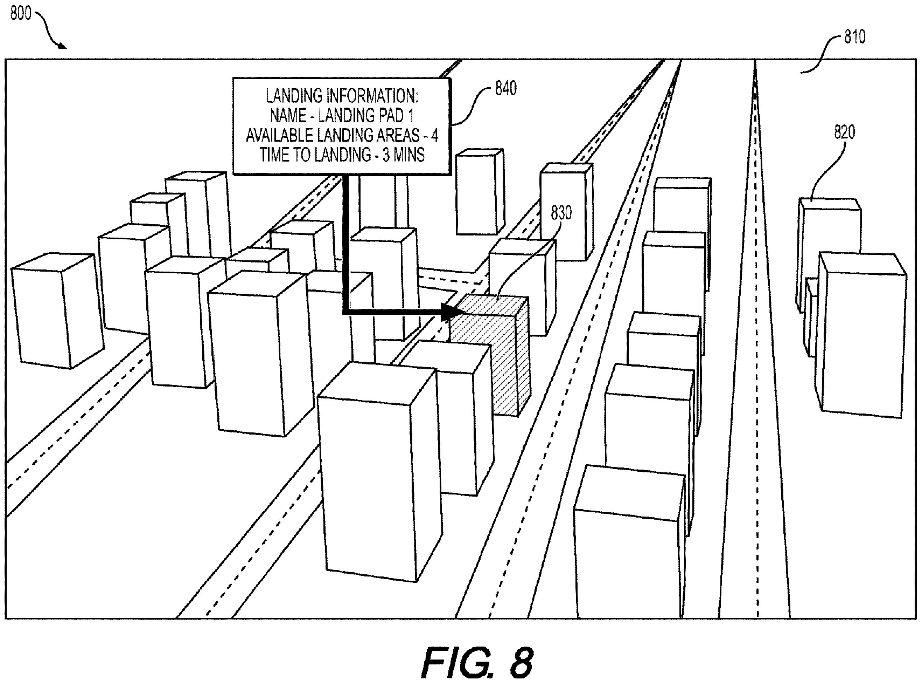

In addition to visual characteristics associated with the buildings themselves, processor 111 can assign visual characteristics that may include graphic elements to display information, such as landing information related to the destination. FIG. 8 illustrates an exemplary GUI 800 in which the destination 830 is labeled with a graphical element 840 that includes one or more pieces of information relevant to the landing pad or the building on which the landing pad is located. Graphical element 840 may be positioned in airspace 810 such that it does not block destination 830 or other buildings 820 that are important to the aircraft's approach. By providing graphical element 840 in GUI 800, the aircraft operator may be able to receive pertinent information regarding the destination without having to look at another screen or display.

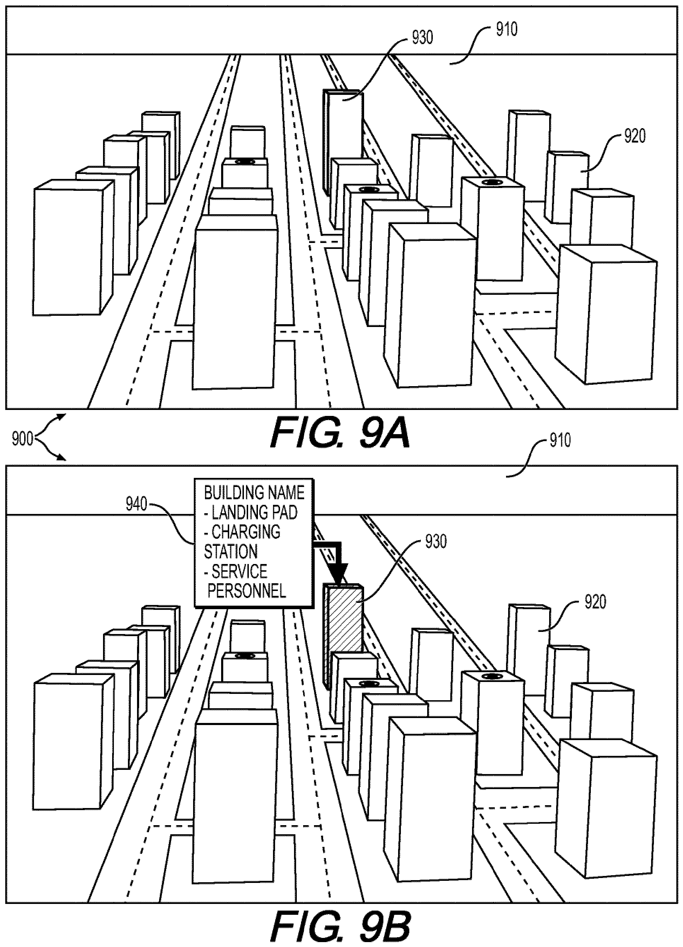

In addition to being able to provide a graphic element for the destination building, FIGS 9A and 9B illustrate GUI 900 before and after a building 930 has been selected, for example, by the aircraft operator. As the aircraft 110 moves through airspace 910, the aircraft operator may wish to have additional information regarding one or more of the buildings 920 present in the airspace 910. By selecting a building 930, the system may be able to obtain building information, and display that information as a graphical element 940. An aircraft operator may select a building by, for example, pressing an appropriate region on GUI 900 as displayed on a touchscreen or other touch sensitive display. In some embodiments, the building selection may be done by way of voice command from the operator of the building, enabling the operator to not only keep both hands free for other flight controls, but also to select buildings for which the operator may not know the physical location in the airspace.

Systems and methods for providing contextual three-dimensional imagery to aircraft operators in accordance with the present disclosure may be able to provide an aircraft operator with contextually relevant information regarding the buildings and structures along the aircraft's path in a visual manner. Displaying three-dimensional navigation imagery that visually represents characteristics or features that may be relevant to the aircraft's current or future phase of flight may reduce or eliminate the need for an aircraft operator to manually change displays or consult separate lists or displays to receive relevant information. By automatically providing information that may answer some of the questions an aircraft operator may have at a particular time, and by reducing the amount an aircraft operator may have to shift their focus to another display or to manually change/adjust a display, aircraft operators may exhibit an increased awareness of how the aircraft may safely proceed through the airspace at any given time.

The general discussion of this disclosure provides a brief, general description of a suitable computing environment in which the present disclosure may be implemented. In one embodiment, any of the disclosed systems and/or methods may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The terminology used above may be interpreted in its broadest reasonable manner, even though it is being used in conjunction with a detailed description of certain specific examples of the present disclosure. Indeed, certain terms may even be emphasized above; however, any terminology intended to be interpreted in any restricted manner will be overtly and specifically defined as such in this Detailed Description section. Both the foregoing general description and the detailed description are exemplary and explanatory only and are not restrictive of the features, as claimed.

Other embodiments of the disclosure will be apparent to those skilled in the art from consideration of the specification and practice of the embodiments disclosed herein. It is intended that the specification and examples be considered as exemplary only, with the true scope of the present disclosure being indicated by the following claims.

## Claims

1. A system comprising:
a display (114) including one or more screens;
a memory (113) storing instructions; and
a processor (111, 131, 141) executing the instructions to perform a process for providing contextual three-dimensional imagery to one or more operators of an aircraft (110) including:
obtaining, from an aircraft control system (115), aircraft flight information including a current position, a current trajectory of the aircraft (110), and a target destination (330, 750, 830);
retrieving, from a database (140), building information for one or more buildings (320, 420, 520, 620, 720, 820, 920) located in a flight path area, the flight path area including the current position of the aircraft (110);
assigning one or more visual characteristics to each of the one or more buildings located in the flight path area based at least in part on the aircraft flight information and the building information;
rendering the one or more buildings in three dimensions, including the one or more visual characteristics assigned to each of the one or more buildings; and
displaying, to the one or more operators of the aircraft (110) via the display (114), the three-dimensional rendering of the one or more buildings,
**characterized in that**
the aircraft flight information includes an energy level of the aircraft (110),
wherein assigning one or more visual characteristics to each of the one or more buildings (320, 420, 520, 620, 720, 820, 920) comprises:
calculating a range of the aircraft (110), based at least in part on the energy level of the aircraft; and
assigning one of the one or more visual characteristics to the one or more buildings based at least in part on whether or not the one or more buildings is located within the range of the aircraft (110).

2. The system of claim 1, wherein aircraft flight information further includes an operating status identified by the aircraft control system (115), and wherein calculating the range of the aircraft (110) is based at least in part on the operating status.

3. The system of claim 1, wherein the building information for one or more buildings (320, 420, 520, 620, 720, 820, 920) includes the location and dimensions of each of the one or more buildings.

4. The system of claim 3, wherein the building information for one or more buildings (320, 420, 520, 620, 720, 820, 920) includes landing information relevant to whether or not each of the one or more buildings has a landing pad.

5. The system of claim 4, wherein the one or more visual characteristics assigned to each of the one or more buildings (320, 420, 520, 620, 720, 820, 920) includes a landing characteristic for each of the one or more buildings, and wherein a landing graphic element is associated with each of the one or more buildings that includes a landing pad.

6. The system of claim 4, wherein one of the one or more visual characteristics is an opacity of the one or more buildings (320, 420, 520, 620, 720, 820, 920), wherein the opacity of the one or more buildings is assigned such that a building of the one or more buildings that includes a landing pad is assigned an opacity that is greater than the opacity assigned to a building of the one or more buildings that does not include a landing pad.

7. The system of claim 1, wherein aircraft flight information further includes a phase of flight identified by the aircraft control system, and wherein assigning one or more visual characteristics is based in part on the phase of flight

8. The system of claim 1, further comprising an operator input device, wherein the process further includes:
receiving an operator input, wherein the operator input is a request for building information about one of the one or more buildings (320, 420, 520, 620, 720, 820, 920);
compiling the building information for the one of the one or more buildings; and
displaying, in response to the operator input, a graphic element that includes the building information corresponding to the one of the one or more buildings.

9. A method for providing contextual three-dimensional imagery to one or more operators of an aircraft (110), the method comprising:
obtaining, from an aircraft control system (115), aircraft flight information including a current position, a current trajectory of the aircraft (110), and a target destination (330, 750, 830);
retrieving building information for one or more buildings located in a flight path area that includes the current position of the aircraft (110),
assigning one or more visual characteristics to each of the one or more buildings located in the flight path area based at least in part on the aircraft flight information and the building information;
rendering the one or more buildings in three dimensions with the one or more visual characteristics assigned to each of the one or more buildings; and
displaying the three-dimensional rendering of the one or more buildings to the one or more operators of the aircraft,
**characterized in that**
the aircraft flight information includes an energy level of the aircraft (110),
wherein assigning one or more visual characteristics to each of the one or more buildings (320, 420, 520, 620, 720, 820, 920) comprises:
calculating a range of the aircraft (110), based at least in part on the energy level of the aircraft; and
assigning one of the one or more visual characteristics to the one or more buildings based at least in part on whether or not the one or more buildings is located within the range of the aircraft (110).

## Patentansprüche

1. System, umfassend:
eine Anzeige (114), die einen oder mehrere Bildschirme einschließt;
einen Speicher (113), der Anweisungen speichert; und
einen Prozessor (111, 131, 141), der die Anweisungen ausführt, um einen Prozess zum Bereitstellen kontextueller dreidimensionaler Bilder für einen oder mehrere Piloten eines Luftfahrzeugs (110) durchzuführen, einschließlich:
Erhalten, aus einem Luftfahrzeugsteuerungssystem (115), von Luftfahrzeugfluginformationen, die eine aktuelle Position, eine aktuelle Flugbahn des Luftfahrzeugs (110) und ein Ankunftsziel (330, 750, 830) einschließen;
Abrufen, aus einer Datenbank (140), von Gebäudeinformationen für ein oder mehrere Gebäude (320, 420, 520, 620, 720, 820, 920), die sich in einem Flugroutenbereich befinden wobei der Flugroutenbereich die aktuelle Position des Luftfahrzeugs (110) einschließt;
Zuordnen eines oder mehrerer visueller Merkmale zu jedem des einen oder der mehreren Gebäude, die sich in dem Flugroutenbereich befinden, mindestens teilweise basierend auf den Luftfahrzeugfluginformationen und den Gebäudeinformationen;
Darstellen des einen oder der mehreren Gebäude in drei Dimensionen einschließlich des einen oder der mehreren visuellen Merkmale, die jedem des einen oder der mehreren Gebäude zugeordnet sind; und
Anzeigen der dreidimensionalen Darstellung des einen oder der mehreren Gebäude für den einen oder die mehreren Piloten des Luftfahrzeugs (110) über die Anzeige (114),
**dadurch gekennzeichnet, dass**
die Luftfahrzeugfluginformationen ein Energieniveau des Luftfahrzeugs (110) einschließen,
wobei das Zuordnen eines oder mehrerer visueller Merkmale zu jedem des einen oder der mehreren Gebäude (320, 420, 520, 620, 720, 820, 920) umfasst:
Berechnen einer Reichweite des Luftfahrzeugs (110) mindestens teilweise basierend auf dem Energieniveau des Luftfahrzeugs; und
Zuordnen eines des einen oder der mehreren visuellen Merkmale zu dem einen oder den mehreren Gebäuden mindestens teilweise basierend darauf, ob sich das eine oder die mehreren Gebäude innerhalb der Reichweite des Luftfahrzeugs (110) befinden oder nicht.

2. System nach Anspruch 1, wobei die Luftfahrzeugfluginformationen ferner einen Betriebsstatus einschließen, der durch das Luftfahrzeugsteuerungssystem (115) erkannt wird, und wobei das Berechnen der Reichweite des Luftfahrzeugs (110) mindestens teilweise auf dem Betriebsstatus basiert.

3. System nach Anspruch 1, wobei die Gebäudeinformationen für ein oder mehrere Gebäude (320, 420, 520, 620, 720, 820, 920) den Standort und die Abmessungen jedes des einen oder der mehreren Gebäude einschließen.

4. System nach Anspruch 3, wobei die Gebäudeinformationen für ein oder mehrere Gebäude (320, 420, 520, 620, 720, 820, 920) Landeinformationen einschließen, die bezüglich dessen relevant sind, ob jedes des einen oder der mehreren Gebäude einen Landeplatz aufweist oder nicht.

5. System nach Anspruch 4, wobei das eine oder die mehreren visuellen Merkmale, die jedem des einen oder der mehreren Gebäude (320, 420, 520, 620, 720, 820, 920) zugeordnet sind, ein Landeplatzmerkmal für jedes des einen oder der mehreren Gebäude einschließen, und wobei jedem des einen oder der mehreren Gebäude, das einen Landeplatz einschließt, ein Landeplatzgrafikelement zugeordnet ist.

6. System nach Anspruch 4, wobei eines des einen oder der mehreren visuellen Merkmale eine Opazität des einen oder der mehreren Gebäude (320, 420, 520, 620, 720, 820, 920) ist, wobei die Opazität des einen oder der mehreren Gebäude so zugeordnet wird, dass einem Gebäude des einen oder der mehreren Gebäude, das einen Landeplatz einschließt, eine Opazität zugeordnet wird, die größer ist als die Opazität, die einem Gebäude des einen oder der mehreren Gebäude zugeordnet wird, das keinen Landeplatz einschließt.

7. System nach Anspruch 1, wobei die Luftfahrzeugfluginformationen ferner eine Flugphase einschließen, die durch das Luftfahrzeugsteuerungssystem erkannt wurde, und wobei das Zuordnen eines oder mehrerer visueller Merkmale teilweise auf der Flugphase basiert.

8. System nach Anspruch 1, ferner umfassend eine Piloteneingabevorrichtung, wobei der Prozess ferner einschließt:
Empfangen einer Piloteneingabe, wobei die Piloteneingabe eine Anfrage nach Gebäudeinformationen über eines des einen oder der mehreren Gebäude (320, 420, 520, 620, 720, 820, 920) ist;
Zusammenstellen der Gebäudeinformationen für das eine oder die mehreren Gebäude; und
Anzeigen, als Reaktion auf die Piloteneingabe, eines grafischen Elements, das die Gebäudeinformationen einschließt, die dem einen der ein oder mehreren Gebäude entsprechen.

9. Verfahren zum Bereitstellen kontextueller dreidimensionaler Bilder für einen oder mehrere Luftfahrzeugbetreiber (110), wobei das Verfahren umfasst:
Erhalten, aus einem Luftfahrzeugsteuerungssystem (115), von Luftfahrzeugfluginformationen, die eine aktuelle Position, eine aktuelle Flugbahn des Luftfahrzeugs (110) und ein Ankunftsziel (330, 750, 830) einschließen;
Abrufen von Gebäudeinformationen für ein oder mehrere Gebäude, die sich in einem Flugroutenbereich befinden, der die aktuelle Position des Luftfahrzeugs (110) einschließt,
Zuordnen eines oder mehrerer visueller Merkmale zu jedem des einen oder der mehreren Gebäude, die sich in dem Flugroutenbereich befinden, mindestens teilweise basierend auf den Luftfahrzeugfluginformationen und den Gebäudeinformationen;
Darstellen des einen oder der mehreren Gebäude in drei Dimensionen, mit dem einen oder den mehreren visuellen Merkmalen, die jedem des einen oder der mehreren Gebäude zugeordnet sind; und
Anzeigen der dreidimensionalen Darstellung des einen oder der mehreren Gebäude für den einen oder die mehreren Luftfahrzeugpiloten,
**dadurch gekennzeichnet, dass**
die Luftfahrzeugfluginformationen ein Energieniveau des Luftfahrzeugs (110) einschließen,
wobei das Zuordnen eines oder mehrerer visueller Merkmale zu jedem des einen oder der mehreren Gebäude (320, 420, 520, 620, 720, 820, 920) umfasst:
Berechnen einer Reichweite des Luftfahrzeugs (110) mindestens teilweise basierend auf dem Energieniveau des Luftfahrzeugs; und
Zuordnen eines des einen oder der mehreren visuellen Merkmale zu dem einen oder den mehreren Gebäuden mindestens teilweise basierend darauf, ob sich das eine oder die mehreren Gebäude innerhalb der Reichweite des Luftfahrzeugs (110) befinden oder nicht.

## Revendications

1. Système comprenant :
un affichage (114) comprenant un ou plusieurs écrans ;
une mémoire (113) stockant des instructions ; et
un processeur (111, 131, 141) exécutant les instructions pour réaliser un processus pour fournir une imagerie tridimensionnelle contextuelle à un ou plusieurs opérateurs d'un aéronef (110) comprenant :
l'obtention, à partir d'un système de commande d'aéronef (115), d'informations de vol d'aéronef comprenant une position actuelle, une trajectoire actuelle de l'aéronef (110) et une destination cible (330, 750, 830) ;
la récupération, à partir d'une base de données (140), d'informations de bâtiment pour un ou plusieurs bâtiments (320, 420, 520, 620, 720, 820, 920) situés dans une zone de trajectoire de vol, la zone de trajectoire de vol comprenant la position actuelle de l'aéronef (110) ;
l'attribution d'une ou de plusieurs caractéristiques visuelles à chaque bâtiment parmi le ou les bâtiments situés dans la zone de trajectoire de vol sur la base, au moins en partie, des informations de vol d'aéronef et des informations de bâtiment ;
la restitution du ou des bâtiments en trois dimensions, y compris de la ou des caractéristiques visuelles attribuées à chaque bâtiment parmi le ou les bâtiments ; et
l'affichage, pour le ou les opérateurs de l'aéronef (110) par l'intermédiaire de l'affichage (114), de la restitution tridimensionnelle du ou des bâtiments,
**caractérisé en ce que**
les informations de vol d'aéronef comprennent un niveau d'énergie de l'aéronef (110),
dans lequel l'attribution d'une ou de plusieurs caractéristiques visuelles à chaque bâtiment parmi le ou les bâtiments (320, 420, 520, 620, 720, 820, 920) comprend :
le calcul d'une portée de l'aéronef (110), basée, au moins en partie, sur le niveau d'énergie de l'aéronef ; et
l'attribution d'une caractéristique parmi la ou les caractéristiques visuelles au(x) bâtiment(s) sur la base, au moins en partie, du fait que le ou les bâtiments sont situés ou non à portée de l'aéronef (110).

2. Système selon la revendication 1, dans lequel les informations de vol d'aéronef comprennent en outre un état de fonctionnement identifié par le système de commande d'aéronef (115) et dans lequel le calcul de la portée de l'aéronef (110) est basé, au moins en partie, sur l'état de fonctionnement.

3. Système selon la revendication 1, dans lequel les informations de bâtiment pour un ou plusieurs bâtiments (320, 420, 520, 620, 720, 820, 920) comprennent l'emplacement et les dimensions de chaque bâtiment parmi le ou les bâtiments.

4. Système selon la revendication 3, dans lequel les informations de bâtiment pour un ou plusieurs bâtiments (320, 420, 520, 620, 720, 820, 920) comprennent des informations d'atterrissage relatives au fait de savoir si chaque bâtiment parmi le ou les bâtiments a ou non une piste d'atterrissage.

5. Système selon la revendication 4, dans lequel la ou les caractéristiques visuelles attribuées à chaque bâtiment parmi le ou les bâtiments (320, 420, 520, 620, 720, 820, 920) comprennent une caractéristique d'atterrissage pour chaque bâtiment parmi le ou les bâtiments et dans lequel un élément graphique d'atterrissage est associé à chaque bâtiment parmi le ou les bâtiments qui comprend une piste d'atterrissage.

6. Système selon la revendication 4, dans lequel une caractéristique parmi la ou les caractéristiques visuelles est une opacité du ou des bâtiments (320, 420, 520, 620, 720, 820, 920), dans lequel l'opacité du ou des bâtiments est attribuée de sorte qu'un bâtiment parmi le ou les bâtiments qui comprend une piste d'atterrissage se voie attribuer une opacité qui est supérieure à l'opacité attribuée à un bâtiment parmi le ou les bâtiments qui ne comprend pas de piste d'atterrissage.

7. Système selon la revendication 1, dans lequel les informations de vol d'aéronef comprennent en outre une phase de vol identifiée par le système de commande d'aéronef et dans lequel l'attribution d'une ou de plusieurs caractéristiques visuelles est basée en partie sur la phase de vol.

8. Système selon la revendication 1, comprenant en outre un dispositif d'entrée d'opérateur, dans lequel le processus comprend en outre :
la réception d'une entrée d'opérateur, dans lequel l'entrée d'opérateur est une demande d'informations de bâtiment concernant un bâtiment parmi le ou les bâtiments (320, 420, 520, 620, 720, 820, 920) ;
la compilation des informations de bâtiment pour un bâtiment parmi le ou les bâtiments ; et
l'affichage, en réponse à l'entrée d'opérateur, d'un élément graphique qui comprend les informations de bâtiment correspondant au bâtiment parmi le ou les bâtiments.

9. Procédé pour fournir une imagerie tridimensionnelle contextuelle à un ou plusieurs opérateurs d'un aéronef (110), le procédé comprenant :
l'obtention, à partir d'un système de commande d'aéronef (115), d'informations de vol d'aéronef comprenant une position actuelle, une trajectoire actuelle de l'aéronef (110) et une destination cible (330, 750, 830) ;
la récupération d'informations de bâtiment pour un ou plusieurs bâtiments situés dans une zone de trajectoire de vol qui comprend la position actuelle de l'aéronef (110),
l'attribution d'une ou de plusieurs caractéristiques visuelles à chaque bâtiment parmi le ou les bâtiments situés dans la zone de trajectoire de vol sur la base, au moins en partie, des informations de vol d'aéronef et des informations de bâtiment ;
la restitution du ou des bâtiments en trois dimensions avec la ou les caractéristiques visuelles attribuées à chaque bâtiment parmi le ou les bâtiments ; et
l'affichage de la restitution tridimensionnelle du ou des bâtiments pour le ou les opérateurs de l'aéronef,
**caractérisé en ce que**
les informations de vol d'aéronef comprennent un niveau d'énergie de l'aéronef (110),
dans lequel l'attribution d'une ou de plusieurs caractéristiques visuelles à chaque bâtiment parmi le ou les bâtiments (320, 420, 520, 620, 720, 820, 920) comprend :
le calcul d'une portée de l'aéronef (110), basée, au moins en partie, sur le niveau d'énergie de l'aéronef ; et
l'attribution d'une caractéristique parmi la ou les caractéristiques visuelles au(x) bâtiment(s) sur la base, au moins en partie, du fait que le ou les bâtiments sont situés ou non à portée de l'aéronef (110).
